(19) Europäisches Patentamt
European Patent Office
Office européen des brevets

(11) EP 4 173 702 A1

(12) EUROPEAN PATENT APPLICATION

(43) Date of publication:
**03.05.2023 Bulletin 2023/18**

(21) Application number: **22203456.3**

(22) Date of filing: **25.10.2022**

(51) International Patent Classification (IPC):
***B01J 23/46*** *(2006.01)* ***B01J 37/02*** *(2006.01)*
***B01D 53/94*** *(2006.01)* ***B01J 35/00*** *(2006.01)*

(52) Cooperative Patent Classification (CPC):
**B01J 23/464; B01D 53/945; B01J 35/0013; B01J 35/006; B01J 37/0203; B01J 37/0248;**
B01D 2255/1021; B01D 2255/1025;
B01D 2255/2092; B01D 2255/407; B01D 2258/014

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **26.10.2021 US 202163263035 P**

(71) Applicant: **Johnson Matthey Public Limited Company**
**London EC4A 4AB (GB)**

(72) Inventors:
- **HOWARD, Michael**
  **Wayne, 19087 (US)**
- **LU, Jing**
  **Wayne, 19087 (US)**
- **ZHENG, Qinghe**
  **Wayne, 19087 (US)**

(74) Representative: **Wilson, Nicola Ann**
**Johnson Matthey Public Limited Company**
**Johnson Matthey Technology Centre**
**Blount's Court Road**
**Sonning Common**
**Reading, Berkshire RG4 9NH (GB)**

# (54) POLYMALEIC ACID ASSISTED METAL NANOPARTICLE SYNTHESIS FOR THREE-WAY CATALYSIS APPLICATION

(57) A method of manufacturing a catalyst article, the method comprising: providing a complex of a maleic acid-containing polymer and a PGM; providing a support material; applying the complex to the support material to form a loaded support material; disposing the loaded support material on a substrate; and heating the loaded support material to form nanoparticles of the PGM on the support material.

Figure 1a

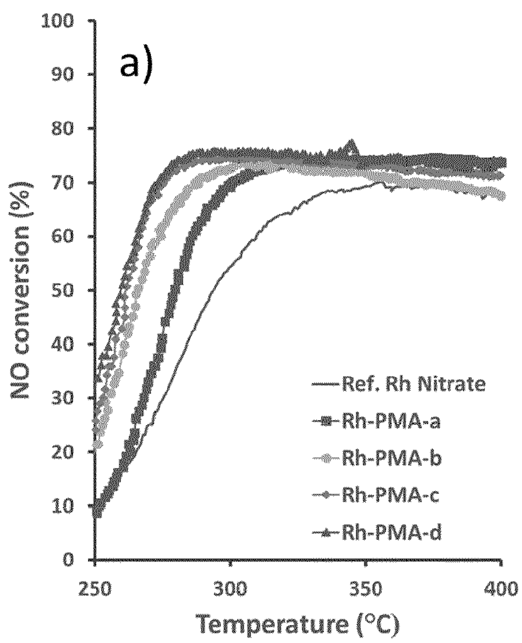


EP 4 173 702 A1

## Description

FIELD OF THE INVENTION

The invention relates to a method of manufacturing a catalyst article, a catalyst article obtainable by the method, an emission treatment system and a method of treating an exhaust gas.

BACKGROUND OF THE INVENTION

A three-way catalyst (TWC) allows simultaneous conversions (~98%) of CO, HCs and $NO_x$ from gasoline engine exhaust to innocuous compounds at stoichiometric air-to-fuel ratio. Specifically, the oxidation of CO and HCs to $CO_2$ and steam ($H_2O$) is mainly catalyzed by Pd, while the reduction of $NO_x$ to $N_2$ is mainly catalyzed by Rh. Modern TWCs use supported platinum group metal (hereinafter "PGM") catalysts (Pd, Rh, Pt, *etc.*) deposited on a single, double or multilayer support, with the support material consisting of metal oxides with high specific surface area, primarily stabilized gamma alumina and ceria-containing oxygen storage materials. The supported catalyst is washcoated on a ceramic monolithic substrate.

Conventional preparation of a TWC washcoat slurry generally involves the use of a solution of an inorganic PGM precursor, e.g. nitrate, acetate, or chloride salt, to allow the PGM element to be deposited onto the oxide support via incipient wetness or wet impregnation. Promoter salts are also often added to the washcoat formulations for enhanced TWC performance. Once the monolithic substrate is washcoated with the as-prepared slurry, drying and calcination steps are followed to decompose the inorganic salts and to allow PGM and promoter elements to be fixed onto the support materials. It is known that the performance of supported metal catalysts depends on the structure and composition of the metal nanoparticles, and the nature of the support. Conventional TWCs prepared using the above method often provide only limited control over the structure of the catalytically active species (*i.e.* average PGM particle size and composition, location of the active components, and metal-support interactions). This is mainly due to metal migration and grain growth during high temperature calcination process.

With increasingly stringent environmental regulations, TWCs with higher emissions abatement efficiency are needed. On the other hand, with increasing PGM cost, there is an urgent need of reducing PGM loading without comprising TWC performance. A better control of the PGM particle size and metal-support interaction is essential in optimizing the TWC performance. Furthermore, a uniformed PGM particle size distribution may contribute to a reduction in the extent of metal sintering due to Ostwald Ripening, as often occurs during a fuel cutoff process, an engine strategy used for enhanced fuel economy.

The catalyst light-off is the minimum temperature necessary to initiate the catalytic reaction. In particular, the light-off temperature is the temperature at which conversion reaches 50%. There is a need for catalyst articles with reduced light-off temperatures.

US2012/0077669A1 describes a polymer-assisted synthesis of a supported metal catalyst for automotive applications. The polymers used in the examples include poly(vinylpyrrolidone), poly(acrylic acid), and poly(ethyleneimine). In the described synthesis procedures, the support (alumina powder) is first impregnated with a polymer-containing aqueous solution. The impregnated support is then separated from the above solution by filtration and drying steps. The dried impregnated support is further impregnated with a PGM precursor solution by incipient wetness impregnation. The as-described process involves multiple steps for the formation of as-claimed supported metal catalysts, which increases the cost and difficulty for commercial-scale production. US 2012/0077669 A1 indicates that a lean burn engine is preferably used, such as a diesel engine or a lean burn gasoline engine, for the application of the technology.

SUMMARY OF THE INVENTION

One aspect of the present disclosure is directed to a method of manufacturing a catalyst article, the method comprising: providing a complex of a maleic acid-containing polymer and a PGM; providing a support material; applying the complex to the support material to form a loaded support material; disposing the loaded support material on a substrate; and heating the loaded support material to form nanoparticles of the PGM on the support material.

Another aspect of the present disclosure is directed to a catalyst article obtained by the method in the first aspect.

The invention also encompasses an exhaust system for internal combustion engines that comprises the catalyst article in the second aspect.

BRIEF DESCRIPTION OF THE DRAWINGS

**Figure 1a** shows NO conversion results of perturbated light-off performance testing of Example catalyst articles manufactured according to method of the present invention and a Reference Example catalyst article; **Figure 1b** shows CO conversion results of perturbated light-off performance testing of Example catalyst articles manufactured according to method of the present invention and a Reference Example catalyst article; **Figure 1c** shows THC conversion results of perturbated light-off performance testing of Example catalyst articles manufactured according to method of the present invention and a Reference Example catalyst article.

**Figure 2a** shows NO conversion results of perturbated light-off performance testing of Example catalyst articles manufactured according to method of the present invention and a Reference Example catalyst article; **Figure 2b** shows CO conversion results of perturbated light-off performance testing of Example catalyst articles manufactured according to method of the present invention and a Reference Example catalyst article; **Figure 2c** shows THC conversion results of perturbated light-off performance testing of Example catalyst articles manufactured according to method of the present invention and a Reference Example catalyst article.

**Figure 3a** shows NO conversion results of perturbated light-off performance testing of Example catalyst articles manufactured according to method of the present invention and a Reference Example catalyst article; **Figure 3b** shows CO conversion results of perturbated light-off performance testing of Example catalyst articles manufactured according to method of the present invention and a Reference Example catalyst article; **Figure 3c** shows THC conversion results of perturbated light-off performance testing of Example catalyst articles manufactured according to method of the present invention and a Reference Example catalyst article.

**Figure 4** shows Rh uptake of 1 wt.% Rh on La doped alumina with Rh nitrate reference and in-situ modification of Rh with various Rh-PMA

## DETAILED DESCRIPTION OF THE INVENTION

The present invention seeks to tackle at least some of the problems associated with the prior art or at least to provide a commercially acceptable alternative solution thereto.

In a first aspect, the present invention provides a method of manufacturing a catalyst article, the method comprising:

providing a complex of a maleic acid-containing polymer and a PGM;
providing a support material;
applying the complex to the support material to form a loaded support material;
disposing the loaded support material on a substrate; and
heating the loaded support material to form nanoparticles of the PGM on the support material.

Each aspect or embodiment as defined herein may be combined with any other aspect(s) or embodiment(s) unless clearly indicated to the contrary. In particular, any features indicated as being preferred or advantageous may be combined with any other feature indicated as being preferred or advantageous.

Surprisingly, when used in an emission treatment system, the catalyst article manufactured by the method of the present invention may exhibit favourable catalytic activity, in particular favourable three-way catalytic activity. For example, the catalyst article may exhibit favourable light-off performance, in particular conversions of NO, CO and total hydrocarbons, during three-way catalytic emissions abatement for a stoichiometric gasoline engine. Such favourable catalytic activity and light-off performance may be superior to that exhibited by conventional catalyst articles with the same/similar PGM specie(s), loading(s), support(s), and configuration(s). The catalyst article may be more durable in comparison to conventional catalyst articles. In other words, such favourable catalytic activity may be exhibited even after aging.

Advantageously, such superior performance may facilitate the use of lower loadings of PGMs in comparison to conventional catalyst articles without compromising catalytic performance. This may be beneficial in view of the high cost of such metals, in particular rhodium. Furthermore, such superior performance may facilitate the partial/complete substitution of high cost PGMs with lower cost PGMs or other transition metals without compromising catalytic performance.

Without being bound by theory, it is hypothesised that such superior performance may be provided by a favourable particle size distribution of the PGM nanoparticles on the support material. During complexation of PGM with the maleic acid-containing polymer, ions of PGM may react with carboxylic functional groups, with the same predictable amount of PGM ions "uptaken" by each polymer unit structure, wherein the total amount of PGM "uptaken" is determined by the polymer molecular structure/size and PGM-polymer coordination ratio. Each complex may then react/interact

with surface functional groups (e.g. hydroxyl groups) or surface charges to allow "anchoring" of PGM-polymer complexes onto the support material surface. The "anchored" PGM-polymer complexes may be separated apart due to polymeric steric effects and the available amount of support material surface functional groups/charges. The interaction between the complex and support material functional groups may increase PGM uptake by the support, compared to catalyst prepared by conventional methods. Without being bound by theory, it is also hypothesized that such even separation may lead to a narrower particle size distribution of PGM nanoparticles (more uniformed particle sizes) upon heating (calcination), which further leads to a reduction in excess agglomeration and/or sintering of PGM particles during ageing and/or fuel-cut events. In other words, compared to conventional catalyst, a more sintering-resistant catalyst article may be obtained by using the method of the present invention.

In comparison to the method of US2012/0077669A1, the method of the present invention is a simpler and more efficient "one-pot" method. The method of the present invention does not require separate impregnation, filtration, and drying steps for depositing the polymer molecules onto the support material. By using the method of the present invention, the yield of polymer-support and PGM-polymer interactions may increase because each polymer molecule added is utilized for interactions. In contrast, in US2012/0077669A1, only limited amount of polymer molecules may stay on the support after the filtration and washing steps. Furthermore, the catalyst article prepared by the method of the present invention may be specifically used as a three-way catalyst for stoichiometric gasoline emissions abatement. In contrast, the catalyst article made by the method of US2012/0077669A1 has a particular application in lean burn diesel or gasoline engines.

The term "catalyst article" used herein may encompass an article in which a catalyst is supported thereon or therein. The article may take the form of, for example, a honeycomb monolith, or a filter, e.g. a wall flow filter or a flow-through filter. The catalyst article may be for use in an emission treatment system, in particular an emission treatment system for a gasoline engine, preferably a stoichiometric gasoline engine. The catalyst article may be for use in three-way catalysis.

Providing a complex of a maleic acid-containing polymer and a PGM typically involves providing the complex in solution, for example an aqueous or alcohol solution. Providing a complex of a maleic acid-containing polymer and a PGM typically involves mixing inorganic PGM precursor(s) and maleic acid-containing polymer in pure or solution form in an aqueous medium, for example mixing PGM nitrate and maleic acid-containing polymer in water.

The term "maleic acid" as used herein may encompass *cis*-butenedioic acid, i.e.

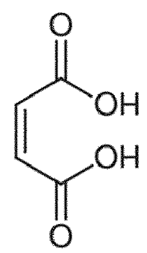

The term "maleic acid-containing polymer" as used herein may encompass a class of polymers formed, at least in part, from maleic acid. The polymer may comprise a homopolymer, i.e. polymaleic acid. Alternatively, the polymer may comprise a copolymer formed of maleic acid and at least one other monomer. The polymer may be linear or branched, but is preferably branched. The polymer may be in dendrimeric form.

The term "platinum group metal" or "PGM" as used herein may encompass ruthenium, rhodium, palladium, osmium, iridium and platinum. The PGM may comprise one of these metals. Alternatively, the PGM may comprise two or more of these metals. The PGM may be in the form of an alloy.

The complex may have a PGM to carboxylic group ratio of from 1:1 to 1:10, preferably from 1:2 to 1:8, more preferably from 1:5 to 1:7.

The support material may be any material that is capable of supporting the complex and nanoparticles thereon on therein. The support material may take any form, but is typically in the form of a powder, more typically a high surface area powder. When the method of the present invention is used to prepare a catalysed filter, such as a wall flow filter or flow-through filter, the support material will typically be in the form of a powder having a D50 of, for example, from 0.1 to 25 μm, more typically from 0.5 to 5 μm as measured using TEM. Such particle sizes may facilitate desirable rheological properties of a slurry used to coat the filter. The support material may function as a washcoat. The support material may be a washcoat or may be part of a washcoat.

The support material may also serve as an oxygen storage material, which stores and releases oxygen respectively at fuel lean and fuel rich conditions, for facilitating the three-way catalytic conversion.

Applying the complex to the support material typically involves contacting the complex and support material in the presence of a solvent (typically water) so as to produce a slurry. The term "slurry" as used herein may encompass

a liquid comprising insoluble material, e.g. insoluble particles. The slurry may comprise (1) solvent; (2) soluble content, e.g. unreacted maleic acid-containing polymer, inorganic PGM and promoter precursor(s), and PGM-polymer complex (outside of the support); and (3) insoluble content, e.g. support particles with and without interactions with the polymer and metal precursors. The slurry is typically stirred, more typically for at least 10 minutes, more typically for at least 30 minutes, even more typically for at least an hour. Increased contacting and/or stirring times may increase the amount of complex that is loaded onto the support material.

The term "loaded support material" as used herein may encompass a support material that has the PGM-polymer complex loaded thereon (*e.g.* on the surface of a high-surface area metal oxide support material) and/or loaded therein (*e.g.* within the pores of a zeolite support material). The complex is typically fixed to the support, for example by electrostatic forces, hydrogen bonds, coordinate bonds, covalent bonds, and/or ionic bonds. For example, in the case of an oxide, carboxyl functional groups in the maleic acid-containing polymer and surface hydroxyl groups on the support may interact through electrostatic forces or hydrogen-bond formation.

The term "substrate" as used herein may encompass, for example, a ceramic or metallic honeycomb, or a filter block, *e.g.* a wall flow filter or flow-through filter. The substrate may comprise a ceramic monolithic substrate. The substrate may vary in its material composition, size and configuration, cell shape and density, and wall thickness. Suitable substrates are known in the art.

Disposing the loaded support material on a substrate may be carried out using techniques known in the art. Typically, the loaded support material is disposed on the substrate by pouring a slurry of the loaded support material into the inlet of the substrate using a specific moulding tool in a predetermined amount. As discussed in more detail below, subsequent vacuum and drying steps may be employed during the disposition step. When the support is a filter block, the loaded support material may be disposed on the filter walls, within the filter walls (if porous) or both.

Heating the loaded support material is typically carried out in an oven or furnace, more typically a belt or static oven or furnace, typically in hot air at a specific flow from one direction. The heating may comprise drying. The heating may also comprise calcination. The drying and calcination steps may be continuous or sequential. For example, a separate washcoat may be applied after the substrate is already washcoated and dried with a previous washcoat. A washcoated substrate can also be dried and calcined using one continuous heating program if coating is completed. During the heating, the complex may at least partially, substantially or completely decompose. In other words, the ligands of the complex, i.e. the maleic acid-containing polymer, are at least partially, substantially or completely removed or separated from the PGM, and are removed from the final catalyst article. Particles of such separated PGMs may then begin to form metal-metal and metal-oxide bonds. As a result of the heating (calcination), the substrate is typically substantially free of maleic acid-containing polymer, more typically completely free of maleic acid-containing polymer.

The term "nanoparticle" as used herein may encompass a particle having a diameter of from 0.01 nm to 100 nm as measured by TEM. The nanoparticles may be in any shape, *e.g.* a sphere, a plate, cubic, cylindrical, hexagonal or a rod, but are typically spherical. The largest dimension of the nanoparticle (*i.e.* the diameter if the nanoparticle is spherical), will typically be from 0.5 to 10 nm, more typically from 1 to 5 nm, as measured by TEM.

Following the heating step, the substrate is typically cooled, more typically to room temperature. The cooling is typically carried out in air with or without cooling agent/media, typically without cooling agent.

The maleic acid-containing polymer preferably comprises one or more of polymaleic acid (i.e. homopolymer), poly(methyl vinyl ether-alt-maleic acid) and poly(acrylic acid-co-maleic acid). Such polymers may be linear or branched, but are preferably branched, and may be in dendrimeric form. The use of such species may result in particularly favourable perturbated light-off performance.

Polymaleic acid may have the following general formula:

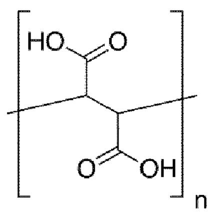

Poly(methyl vinyl ether-alt-maleic acid) (*a.k.a.,* maleic acid-methyl vinyl ether copolymer, vinyl methyl ether-maleic acid copolymer, poly(maleic acid-methyl vinyl ether), methoxyethylene-maleic acid copolymer) may have the following general formula:

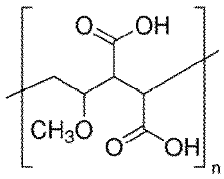

Poly(acrylic acid-co-maleic acid) may have the following general formula:

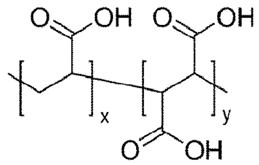

In a preferred embodiment, the maleic acid-containing polymer comprises polymaleic acid. The use of polymaleic acid may result in particularly favourable perturbated light-off performance.

The polymaleic acid preferably has a weight average molecular weight $M_w$ of from 100 to 6,000,000, more preferably from 10,000 to 4,000,000 g/mol, even more preferably from 100,000 to 2,000,000 g/mol, still even more preferably from 190,000 to 400,000 g/mol measured by light scattering. The weight average molecular weight *M*w is determined by the formula:

$$\bar{M}_w = \frac{\sum_i N_i M_i^2}{\sum_i N_i M_i}$$

where $N_i$ is the number of molecules of molecular mass $M_i$. The use of such weight average molecular weights may result in particularly favourable perturbated light-off performance.

In other preferred embodiment, the maleic acid-containing polymer comprises a copolymer. The copolymer preferably comprises poly(acrylic acid-co-maleic acid).

The copolymer and/or poly(acrylic acid-co-maleic acid) may be linear or branched, but are preferably branched. The copolymer and/or polymaleic acid may be in dendrimeric form. The use of copolymer, in particular poly(acrylic acid-co-maleic acid), may result in particularly favourable perturbated light-off performance.

The poly(acrylic acid-co-maleic acid) preferably has a weight average molecular weight $M_w$ of from 1,000 to 5,000, more preferably from 2,000 to 4,000 g/mol, even more preferably from 2,500 to 3,500 g/mol measured by light scattering. The weight average molecular weight *M*w is determined by the formula above. The use of such weight average molecular weights may result in particularly favourable perturbated light-off performance.

The poly(acrylic acid-co-maleic acid) preferably has a molar ratio of acrylic acid to maleic acid of from 1.5:1 to 1:1.5, more preferably from 1.25:1 to 1:1.25, even more preferably from 1.1:1 to 1:1.1, still even more preferably about 1:1. The use of such ratios may result in particularly favourable perturbated light-off performance.

The PGM is preferably selected from one or more of rhodium, palladium and platinum, more preferably from rhodium and platinum. Such metals may be particularly suitable for carrying out three-way catalysis. In addition, such metals are expensive meaning that it would be advantageous to be able to provide similar levels of catalytic activity for the same amount of metal. Furthermore, the use of such metals in the method of the present invention may result in particularly favourable perturbated light-off performance.

The PGM more preferably comprises rhodium. Rhodium is a particularly expensive PGM. The use of rhodium in the method of the present invention may result in particularly favourable perturbated light-off performance.

In a preferred embodiment, the PGM comprises rhodium and platinum. The use of such metals in the method of the present invention may result in particularly favourable perturbated light-off performance.

The support material preferably comprises an oxide, preferably one or more of $Al_2O_3$ (aluminum oxide or alumina), $SiO_2$, $TiO_2$, $CeO_2$, $ZrO_2$, $V_2O_5$, $La_2O_3$ and zeolites. The oxide is preferably a metal oxide. The support material more preferably comprises alumina, even more preferably gamma-alumina. The support material preferably comprises zirconia. The alumina and/or zirconia is preferably doped, more preferably with an oxide of one or more of lanthanum, neodymium, yttrium, niobium, praseodymium, hafnium, molybdenum, titanium, vanadium, zinc, cadmium, manganese, iron, copper, calcium, barium, strontium, caesium, magnesium, potassium, or sodium; even more preferably with an

oxide of lanthanum, neodymium or yttrium. Such doped oxides are particularly effective as support materials. Preferably, the dopant is present in the alumina and/or zirconia in an amount of from 0.001 wt.% to 20 wt.%, and more preferably from 0.5 wt.% to 10 wt.%.

The support material is preferably in the form of a powder having a D90 of from 0.1 to 25 μm, more preferably from 0.5 to 5 μm. The D90 may be measured by TEM.

The loading may comprise washcoating.

The loaded support material is preferably disposed onto the substrate in the form of a slurry. A slurry is particularly effective at disposing a material onto a substrate, in particular for maximized gas diffusion and minimized pressure drop during catalytic conversion.

Providing the complex of a PGM and a maleic acid-containing polymer preferably comprises synthesising the complex *in situ* in the slurry.

In a preferred embodiment, the slurry is prepared by a method comprising:

contacting a PGM salt and a maleic acid-containing polymer in water to form the complex of a maleic acid-containing polymer and a PGM in an aqueous solution;
applying the complex to the support material to form a loaded support material by contacting the support material with the aqueous solution;
optionally adding one or more of an oxygen storage material, preferably ceria-zirconia; a promoter salt; a binder; an acid or a base; a thickening agent; and a reducing agent to the aqueous solution.

Such a "one-pot" preparation method may be simplified and lower cost in comparison to conventional methods. It may also maximize utilization of the polymers.

In other words, the steps of providing a complex of a maleic acid-containing polymer and a PGM; providing a support material; applying the complex to the support material to form a loaded support material; and disposing the loaded support material on a substrate may comprise:

contacting a PGM salt and a maleic acid-containing polymer in water to form the complex of a maleic acid-containing polymer and a PGM in an aqueous solution;
adding the support material to the aqueous solution to form a slurry of loaded support material;
optionally adding one or more of an oxygen storage material, preferably ceria-zirconia; a promoter salt; a binder; an acid or a base; a thickening agent; and a reducing agent to the slurry; and
disposing the slurry on the substrate.

In another preferred embodiment, the slurry is prepared by a method comprising:

contacting a PGM salt and a support material in water to form a support material suspension;
contacting the support material suspension with a maleic acid-containing polymer to form a loaded support material, the loaded support material comprising support material having a complex loaded thereon, the complex comprising a complex of the maleic acid-containing polymer and the PGM;
optionally adding one or more of an oxygen storage material, preferably ceria-zirconia; a promoter salt; a binder; an acid or a base; a thickening agent; and a reducing agent to the support material suspension.

Such a "one-pot" preparation method may be simplified and lower cost in comparison to conventional methods. It may also maximize utilization of the polymers.

The slurry preferably has a solids content of from 10 to 40 %, preferably from 15 to 35 %. Such a solids content may enable slurry rheologies suitable for disposing the loaded support material onto the substrate. For example, if the substrate is a honeycomb monolith, such solid contents may enable the deposition of a thin layer of washcoat onto the inner walls of the substrate. If the substrate is a wall flow filter, such solids contents may enable the slurry to enter the channels of the wall flow filter and may enable the slurry to enter the walls of the wall flow filter.

Preferably, the slurry further comprises one or more of:

an oxygen storage material, preferably ceria-zirconia;
a promoter salt;
a binder;
an acid or a base;
a thickening agent; and
a reducing agent.

Promotors may include, for example, a non-PGM transition metal element, a rare earth element, an alkali group element, and/or a combination of two or more of the above elements within the same or different groups in periodic table. The promotor salt may be a salt of such elements.

Binders may include, for example, an oxide material with small particle size to bind the individual insoluble particles together in washcoat slurry. The use of binders in washcoats is well known in the art.

Thickening agents may include, for example, a natural polymer with functional hydroxyl groups that interacts with insoluble particles in washcoat slurry. It serves the purpose of thickening washcoat slurry for the improvement of coating profile during washcoat coating onto substrate. It is usually burned off during washcoat calcination. Examples of specific thickening agents / rheology modifiers for washcoats include glactomanna gum, guar gum, xanthan gum, curdlan schizophyllan, scleroglucan, diutan gum, Whelan gum, hydroxymethyl cellulose, carboxymethyl cellulose, hydroxyethyl cellulose, methyl cellulose, methyl hydroxyethyl cellulose, methyl hydroxypropyl cellulose and ethyl hydroxycellulose.

The term "reducing agent" as described herein may encompass a compound that can reduce the PGM cations to particles in its metallic state *in situ* during washcoat preparation.

An organic acid can be added that acts as a reductant for PGM and/or creates a reducing environment during the later heating / calcinating step. Examples of a suitable organic acid may include citric acid, succinic acid, oxalic acid, ascorbic acid, acetic acid, formic acid, tannic acid, and combinations thereof.

In a preferred embodiment, the PGM comprises rhodium, the support material comprises alumina and the slurry further comprises ceria-zirconia.

The method preferably further comprises disposing a further slurry on the substrate, the further slurry comprising one or more of a further support material; an oxygen storage material; a promoter salt; a binder; an acid or a base; a thickening agent; and a reducing agent, wherein disposing the further slurry on the substrate takes place before disposing the support material on the substrate and/or after heating the loaded support material to form nanoparticles of the PGM on the support material. This may result in a catalyst article having multiple layers of different washcoats, for example a bottom washcoat containing, *inter alia,* palladium nanoparticles supported on alumina, and a top washcoat containing, *inter alia,* rhodium nanoparticles supported on alumina. Optionally, an OSC-type support may be added into either or both above layers. Further examples of such multiple layers are discussed in more detail below.

Disposing the loaded support material on a substrate preferably comprises contacting the slurry with the substrate (e.g. pouring the slurry into an inlet of the substrate) and optionally:

applying a vacuum to the substrate, and/or
drying the slurry on the substrate.

This may result in a favourable distribution of the loaded support material on the substrate.

The drying preferably occurs:

at a temperature of from 60 °C to 200 °C, more preferably from 70 °C to 130 °C; and/or
for from 10 to 360 minutes, preferably from 15 to 60 minutes.

The substrate may be a "blank", *i.e*. un-washcoated, substrate. Alternatively, the substrate may have one or washcoats already loaded thereon. In such a situation, the final catalyst article may comprise multiple layers of different washcoats.

The substrate preferably comprises cordierite. Cordierite substrates are particularly suitable for use in catalyst articles.

The substrate is preferably in the form of a honeycomb monolith, a wall flow filter or a flow through filter.

The heating is preferably carried out:

at a temperature of from 400 °C to 700 °C, preferably from 400 °C to 600 °C, more preferably from 450 °C to 600 °C; and/or
for from 10 to 360 minutes, preferably from 35 to 120 minutes.

Lower temperatures and/or shorter heating times may result in insufficient decomposition of the complex and/or may result in high levels of maleic acid-containing polymer remaining in the substrate. Higher temperatures and/or longer heating times may lead to the particles of PGM having an unfavourably large particle size, presumably due to sintering. Higher temperatures and longer heating times may also lead to damage to the catalyst article.

The heating preferably comprises calcining. The term "calcining" as used herein may encompass a thermal treatment process in the absence of, or limited supply of, air or oxygen to bring about a thermal decomposition.

The nanoparticles preferably have a D50 of from 0.1 nm to 10 nm, more preferably from 0.2 to 5 nm, even

more preferably from 0.2 to 4 nm. The D50 may be measured by TEM. Such particle sizes may result in a favourable level of catalytic activity.

In a further aspect, the present invention provides a catalyst article obtainable by the method described herein, the catalyst article for use in an emission treatment system.

In comparison to conventional catalyst article, the catalyst article obtainable by the method described herein may contain PGM particles having favourably small particle sizes and a favourable particle size distribution (*e.g*. a D50 of from 0.2 to 4 nm). In addition, in comparison to conventional catalyst articles, the catalyst article obtainable by the method described herein may exhibit a more uniformed dispersion of PGM particles throughout the substrate.

When used in an emission treatment system, the catalyst article may exhibit favourable light-off performance, in particular for NO, CO and total hydrocarbons during three-way catalytic conversions for stoichiometric gasoline emissions abatement.

The catalyst is preferably for three-way catalysis.

The catalyst article may have a washcoat loading of from 1 $g/in^3$ to 3 $g/in^3$. Such a catalyst article may exhibit similar or higher catalytic activity in comparison to conventional catalyst articles but may be lower cost in view of the lower levels of PGM employed.

The substrate preferably comprises a wall flow filter substrate or a flow-through substrate.

In a preferred embodiment, the catalyst article comprises a bottom layer of support material having rhodium thereon and a top layer of support material having palladium thereon. In another preferred embodiment, the catalyst article comprises a bottom layer of support material having palladium thereon and a top layer of support material having rhodium thereon. The term "bottom layer" as used herein may encompass a layer (*e.g*. washcoat layer) that is closest to or in contact with the substrate (*i.e.* substrate walls). The term "top layer" as used herein may encompass a layer (*e.g.* a washcoat layer) that is more remote from the substrate (*i.e.* substrate walls) than the bottom layer, and may be situated on top of the bottom layer. In another preferred embodiment, either or both layers maybe further zoned with different catalyst compositions containing same or different PGM species.

In such preferred embodiments, the support material preferably comprises alumina.

The catalyst article, in particular in such preferred embodiments, preferably comprises from 2 $g/ft^3$ to 15 $g/ft^3$ rhodium, more preferably from 3 $g/ft^3$ to 10 $g/ft^3$ rhodium. Advantageously, such rhodium levels may be lower than those of conventional catalyst articles but without compromising catalytic activity.

The catalyst article, in particular in such preferred embodiments, preferably comprises from 20 $g/ft^3$ to 200 $g/ft^3$ palladium, more preferably from 30 $g/ft^3$ to 180 $g/ft^3$ palladium. Advantageously, such palladium levels may be lower than those of conventional catalyst articles but without compromising catalytic activity.

In a preferred embodiment, the loaded support material is disposed on the substrate in the form of a slurry, the PGM comprises rhodium, the support material comprises alumina and the slurry further comprises ceria-zirconia.

In a further aspect, the present invention provides an emission treatment system comprising the catalyst article described herein.

The emission treatment system is preferably for a gasoline engine.

The gasoline engine preferably operates under stoichiometric conditions.

In a further aspect, the present invention provides a method of treating an exhaust gas, the method comprising:

providing the catalyst article described herein; and
contacting the catalyst article with an exhaust gas.

The exhaust gas is preferably an exhaust gas from a gasoline engine. The catalyst article is particularly suitable for treating such exhaust gas. The gasoline engine preferably operates under stoichiometric conditions.

The invention will now be described in relation to the following non-limiting examples.

Maleic acid-containing polymers

The following maleic acid-containing polymers, labelled PMA-a to PMA-d were directly purchased from a supplier.

PMA-a: polymaleic acid, average Mw ~216,000 by LS.

PMA-b: polymaleic acid, average $M_w$ ~1,080,000 by LS.

PMA-c: polymaleic acid, average $M_w$ ~1,980,000 by LS.

PMA-d: poly(acrylic acid-co-maleic acid), 1:1 mole ratio of AA:MA; average $M_w$ 3,000.

Manufacture of catalyst articles

A number of catalyst articles were prepared according to the following examples.

*Reference Example 1: 0.3%Rh/Gamma alumina (with Rh nitrate) washcoated catalyst.*

A catalyst article was prepared carrying by out the following steps:

1. Add required amount of Rh nitrate (5.2 g/ft$^3$) and water to dissolve, mix for 1hr.
2. Add milled gamma alumina (1 g/in$^3$) slurry, mix for 1 hr.
3. Add DI water to adjust solids to ~20%.
4. Add activated 4wt% thickening agent in water to adjust batch solid to 30%. Mix vigorously with VWR vortex mixer until a homogeneous gel form.
5. Coat 1 × 3 inch cores targeting 1.2 inch does from inlet under vacuum pull, dry with air cure.
6. Fire the brick at 500 °C for 30 min in a static oven

*Example 2: 0.3%Rh/Gamma alumina (with Rh modified by PMA-a, b, c, or d) washcoated catalyst.*

A catalyst article was prepared carrying by out the following steps:

1. Add required amount of Rh nitrate (5.2 g/ft$^3$) and water to dissolve, mix for 1hr.
2. Add the required amount of PMA, targeting PMA : Rh mass ratio of 8.0 for PMA-a, PMA-b and PMA-c; PMA : Rh mass ratio of 1.4 for PMA-d. Mix for 1 hr.
3. Add milled gamma alumina slurry, mix for 1 hr.
4. Add DI water to adjust solids to ~20%.
5. Add activated 4wt% thickening agent (1 g/in$^3$) in water to adjust batch solid to 30%. Mix vigorously with VWR vortex mixer until a homogeneous gel form.
6. Coat 1 × 3 inch cores targeting 1.2 inch does from inlet under vacuum pull, dry with air cure.
7. Fire the brick at 500 °C for 30 min in a static oven.

*Reference Example 3: Rh-TWC (with Rh nitrate) washcoated catalyst.*

A catalyst article was prepared carrying by out the following steps:

1. Prepare a slurry of milled gamma alumina support (0.6 g/in$^3$).
2. Add appropriate amount of rhodium nitrate solution (Rh loading 4.8 g/ft$^3$) and mix until homogeneous.
3. Add ammonium dropwise until pH 7.0-7.5 is reached. Washcoat will thicken upon ammonium addition.
4. Mix for 15-20 minutes so rhodium is precipitate throughout the washcoat.
5. Add ceria-zirconia support (0.65 g/in$^3$) and mix for 30 minutes until homogeneous.
6. Add binder material (0.03 g/in$^3$) and mix for 30 minutes.
7. Add DI water to adjust solids to ~23%.
8. Add thickening agent targeting ~1.0-1.2 wt.% water based. Mix for at least 6 hours.
9. Coat cordierite substrate with 1.2 inch single dose washcoat from inlet under vacuum pull, dry with air cure.
10. Fire the washcoated brick at 500 °C for 30 min in a static oven.

*Example 4: Rh-TWC (with Rh modified by PMA-a, b, c, or d) washcoated catalyst.*

A catalyst article was prepared carrying by out the following steps:

1. Prepare a slurry of Rh nitrate (Rh loading 4.8 g/ft$^3$).
2. Add the required amount of PMA, targeting PMA : Rh mass ratio of 8.0 for PMA-a, PMA-b and PMA-C; PMA : Rh mass ratio of 1.4 for PMA-d. Mix for 1 hr.
3. Add milled gamma alumina support (0.6 g/in$^3$) slurry, mix for 1 hr.
4. Add ceria-zirconia support (0.7 g/in$^3$), mix for 30 min.
5. Add binder material (0.03 g/in$^3$), mix for 30 min.
6. Add DI water to adjust solids to ~23%.
7. Add thickening agent targeting ~1.0-1.2 wt.% water based. Mix for at least 6 hours.
8. Coat cordierite substrate with 1.2 inch single dose washcoat from inlet under vacuum pull, dry with air cure.

9. Fire the washcoated brick at 500 °C for 30 min in a static oven.

*Reference Example 5: Rh-Pt bimetallic (with Pt nitrate) TWC washcoated catalyst.*

A catalyst article was prepared carrying by out the following steps:

1. Prepare ceria-zirconia support (1.1 g/in$^3$) slurry, add at least 50% of planned water.
2. Add Rh nitrate (Rh loading 3.6 g/ft$^3$) to the above Ceria-Zirconia slurry, mix for at least 15 min.
3. Adjust pH to > 6 with ammonia; mix for at least 1 hour.
4. Add gamma alumina (0.4 g/in$^3$) slurry and platinum nitrate (Pt loading 1.8 g/ft$^3$), mix for at least 15 min.
5. Adjust pH to > 5.8 with ammonia; mix for at least 30 min.
6. Add binder (0.03 g/in$^3$), mix for at least 30 min.
7. Adjust washcoat to target solid% (suggest ~25%), add thickening agent (suggest ~0.8-1.0%). Mix overnight
8. Coat 50-55% from inlet under vacuum, dry with air cure, then coat 50-55% DL from outlet.
9. Fire the brick at 500 °C for 30 min in a static oven.

*Example 6: Rh-Pt bimetallic TWC (with Pt modified by PMA-a, b, c, or d) washcoated catalyst.*

A catalyst article was prepared carrying by out the following steps:

1. Prepare a solution with required amount of PMA needed to complex with both Rh and Pt. Targeting PMA : Rh mass ratio of 8.0 for PMA-a, PMA-b and PMA-C; PMA : Rh mass ratio of 1.4 for PMA-d. Targeting PMA : Pt mass ratio of 2.8 for PMA-a, PMA-b and PMA-C; PMA : Pt mass ratio of 0.5 for PMA-d.
2. Add Rh nitrate (Rh loading 3.6 g/ft$^3$), mix for 1 h.
3. Add Ceria-Zirconia support (1.1 g/in$^3$) slurry, mix for 1 h.
4. Add gamma alumina (0.4 g/in$^3$) slurry and Platinum nitrate (Pt loading 1.8 g/ft$^3$), mix for 1 h.
5. Add binder (0.03 g/in$^3$), mix for at least 30 min.
6. Adjust washcoat to target solid% (suggest ~25%), add thickening agent (suggest ~0.8-1.0%). Mix overnight.
7. Coat 50-55% from inlet under vacuum, dry with air cure, then coat 50-55% DL from outlet.
8. Fire the brick at 500 °C for 30 min in a static oven.

PERTURBATED LIGHT-OFF PERFORMANCE

After aging, the single supported catalyst articles of Example 2 and Reference Example 1 were tested for perturbated light-off performance for TWC conversions under simulated gasoline exhaust conditions. Aging condition: 1000 °C/ Redox/ 40 hr. Reaction condition: with rich pre-treatment, 150-700 °C, $\lambda$=0.96~1.04, GHSV = 200,000 hr$^{-1}$. The results are shown in **Figures 1a-1c** for NO, CO, and THC conversions, respectively (PMA-a = squares, PMA-b = dots, PMA-c = diamonds, PMA-d = triangles, Rh nitrate reference = line). Comparing to the reference catalyst, the catalysts prepared by complexing Rh with PMAs exhibit significant benefit in TWC activity. The maximum $T_{50}$ reduction for $NO_x$, CO, and THC for single alumina-supported Rh catalyst by PMA modification were respectively 35 °C, 45 °C and 94 °C.

Similar improvements were observed in more the complexed formulated Rh catalysts (Example 4 and Reference Example 3), with the results shown in **Figures 2a-2c** for NO, CO, and THC conversions, respectively (PMA-a = squares, PMA-b = dots, PMA-c = diamonds, PMA-d = triangles, Rh nitrate reference = line). Aging condition: 1000 °C/ Redox/ 40 hr. Reaction condition: with rich pre-treatment, 150-700 °C, $\lambda$=0.96~1.04, GHSV = 200,000 hr$^{-1}$. The Rh-PMA catalysts showed significantly better performance than the reference catalyst, with maximum $T_{50}$ reduction for $NO_x$, CO, and THC respectively 33 °C, 40 °C and 37 °C.

Similar improvements were observed in aged Pt/Rh bimetallic catalysts (Example 6 and Reference Example 5) where both Rh and Pt were modified by PMAs. The results are shown in **Figures 3a-3c** for NO, CO, and THC conversions, respectively (PMA-a = squares, PMA-b = dots, PMA-c = diamonds, PMA-d = triangles, Rh nitrate reference = line). Aging condition: 1050 °C/ Hydrothermal/ 4 hr. Reaction condition: with rich pre-treatment, 150-700 °C, $\lambda$=0.96~1.04, GHSV = 200,000 hr$^{-1}$. The Rh/Pt-PMA catalysts showed significantly better performance than the reference catalyst; with maximum $T_{90}$ reduction for $NO_x$, CO, and THC respectively 51 °C, 25 °C and 55 °C.

PGM UPTAKE

Rh uptake on alumina with Rh nitrate and various Rh-PMAs were measured. To this end, first a number of loaded support materials (La-doped alumina) were prepared:

*Reference: 1%Rh/alumina with Rh nitrate:*
A loaded support material was prepared according to the following method:

1. add required amount of Rh nitrate and alumina in water, targeting 1 wt.% Rh on alumina and 30% batch solid,
2. mix for 1hr.

*1%Rh/alumina with in-situ Rh-PMA-a, b, c, or d modification:*
A loaded support material was prepared according to the following method:

1. add required amount of Rh nitrate and PMA in water,
2. mix for 30 min,
3. add requirement amount of alumina targeting 1 wt.% Rh on alumina and 30% batch solid,
4. mix for 1hr.

In each case, the final suspensions were centrifuged and the supernatants collected. The supernatants were then analysed by ICP-OES to determine the amount of free Rh still remaining in solution. The Rh uptakes into the support materials were determined using the following formula:

$$Rh\ Uptake\ (\%) = \left(1 - \frac{Weight\ of\ Rh\ in\ solution\ at\ the\ end\ of\ the\ test}{Weight\ of\ Total\ Intitial\ Rh\ added\ to\ solution}\right) x\ 100\%$$

The results for the Rh uptake experiment are summarized in FIG. 4. Correlating the Rh uptake results (Rh-PMA-a ≈ Rh-PMA-c > Rh-PMA-b ≈ Rh-PMA-d) and TWC performance from **Fig. 2** (Rh-PMA-a ≈ Rh-PMA-c > Rh-PMA-b ≈ Rh-PMA-d > Ref.) suggests that although all PMAs provides TWC performance improvement for Rh, the benefit increases as the Rh-PMA uptake on the alumina support increases.

The foregoing detailed description has been provided by way of explanation and illustration, and is not intended to limit the scope of the appended claims. Many variations in the presently preferred embodiments illustrated herein will be apparent to one of ordinary skill in the art and remain within the scope of the appended claims and their equivalents.

## Claims

**1.** A method of manufacturing a catalyst article, the method comprising:

providing a complex of a maleic acid-containing polymer and a PGM;
providing a support material;
applying the complex to the support material to form a loaded support material;
disposing the loaded support material on a substrate; and
heating the loaded support material to form nanoparticles of the PGM on the support material.

**2.** The method of claim 1, wherein the maleic acid-containing polymer comprises one or more of polymaleic acid, poly(methyl vinyl ether-alt-maleic acid) and poly(acrylic acid-co-maleic acid).

**3.** The method of claim 1, wherein the maleic acid-containing polymer comprises polymaleic acid.

**4.** The method of claim 1, wherein the maleic acid-containing polymer comprises a copolymer.

**5.** The method of claim 4, wherein the copolymer comprises poly(acrylic acid-co-maleic acid).

**6.** The method of claim 5, wherein the poly(acrylic acid-co-maleic acid) has a molar ratio of acrylic acid to maleic acid of from 1.5:1 to 1:1.5.

**7.** The method of any preceding claim, wherein the PGM is selected from one or more of rhodium, palladium and platinum.

**8.** The method of any preceding claim, wherein the support material comprises an oxide, preferably one of more of $Al_2O_3$, $SiO_2$, $TiO_2$, $CeO_2$, $ZrO_2$, $CeO_2$-$ZrO_2$, $V_2O_5$, $La_2O_3$ and zeolites.

**9.** The method of any preceding claim, wherein the support material comprises alumina, preferably gamma-alumina.

**10.** The method of any preceding claim, wherein the support material comprises zirconia.

**11.** The method of claim 9 or claim 10, wherein the alumina and/or zirconia is doped.

**12.** The method of claim 11, wherein the alumina and/or zirconia is doped with an oxide of one or more of lanthanum, neodymium, yttrium, niobium, praseodymium, hafnium, molybdenum, titanium, vanadium, zinc, cadmium, manganese, iron, copper, calcium, barium, strontium, caesium, magnesium, potassium and sodium, preferably one or more of lanthanum, neodymium and yttrium.

**13.** The method of any preceding claim, wherein the loaded support material is disposed on the substrate in the form of a slurry.

**14.** The method of claim 13, wherein the slurry is prepared by a method comprising:

contacting a PGM salt and a maleic acid-containing polymer in water to form the complex of a maleic acid-containing polymer and a PGM in an aqueous solution;
applying the complex to the support material to form a loaded support material by contacting the support material with the aqueous solution;
optionally adding one or more of an oxygen storage material, preferably ceria-zirconia; a promoter salt; a binder; an acid or a base; a thickening agent; and a reducing agent to the aqueous solution.

**15.** The method of claim 13 or claim 14, wherein the PGM comprises rhodium, the support material comprises alumina and the slurry further comprises ceria-zirconia.

**16.** A catalyst article obtainable by the method of any preceding claim, the catalyst article for use in an emission treatment system.

**Figure 1a**

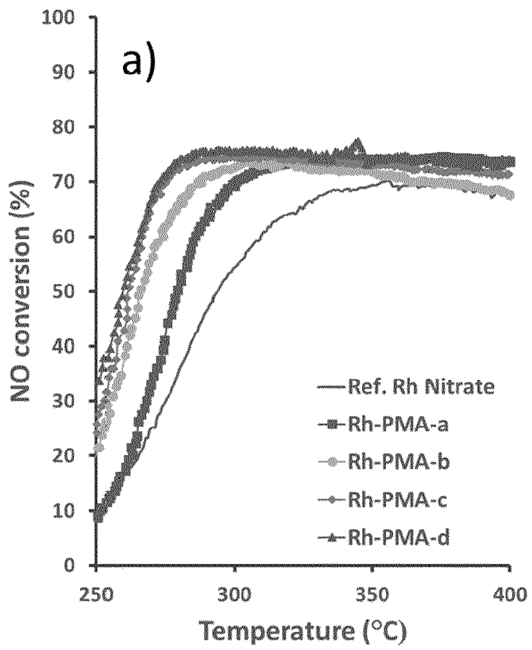


**Figure 1b**

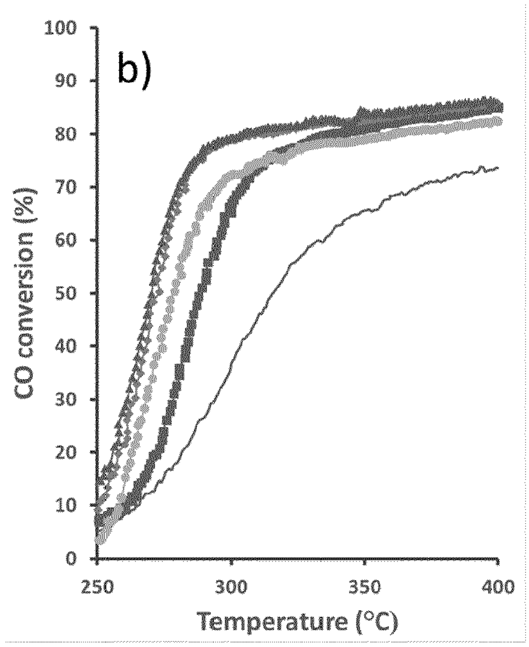

**Figure 1 c**

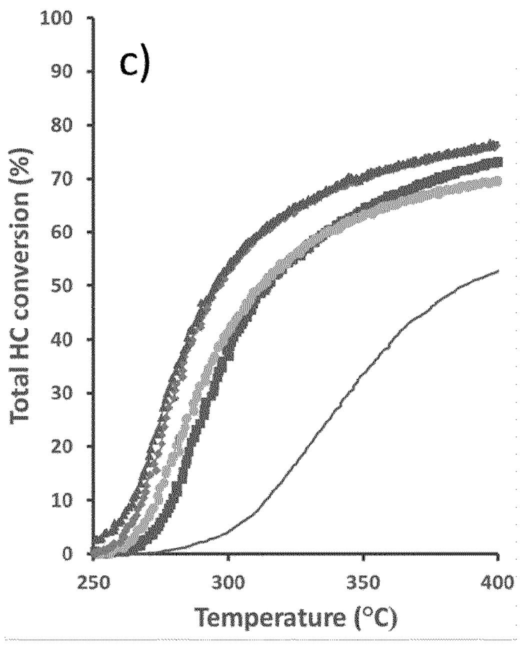


**Figure 2a**

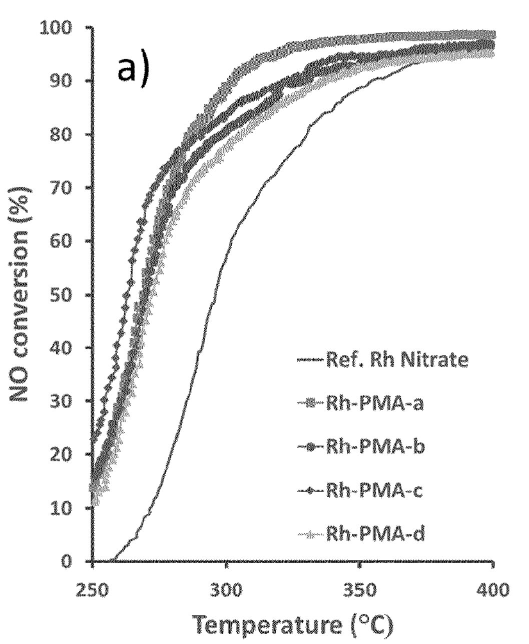

Figure 2b

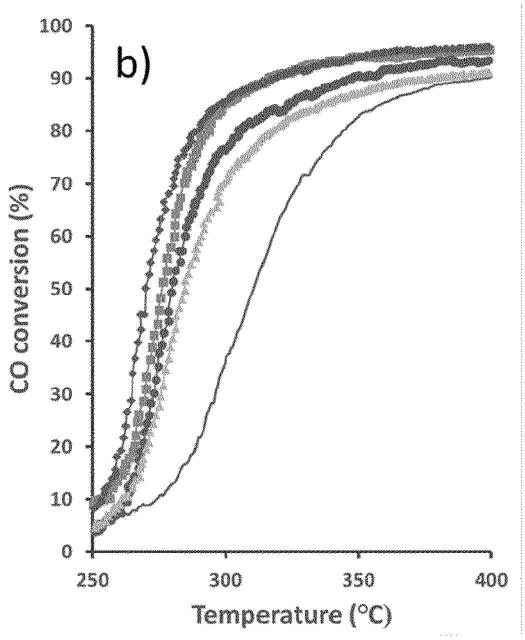


Figure 2c

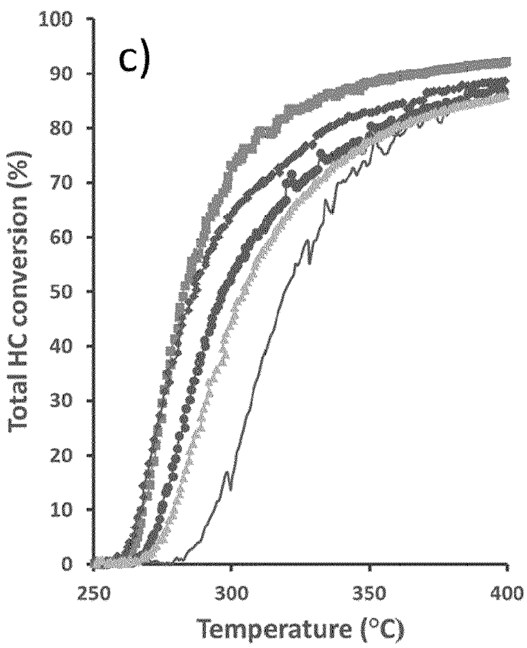

**Figure 3a**

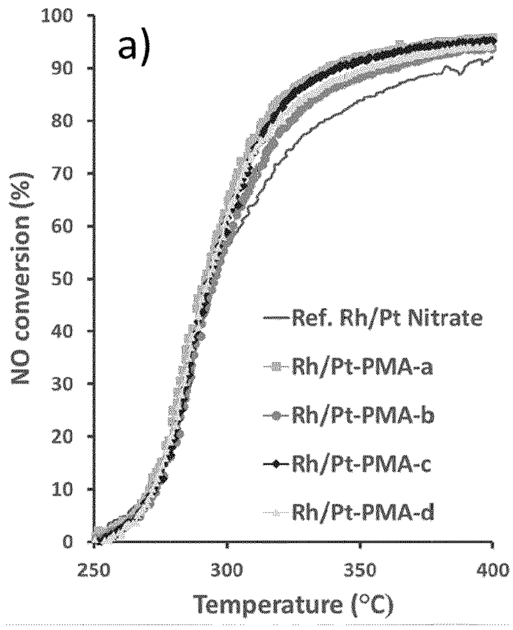


**Figure 3b**

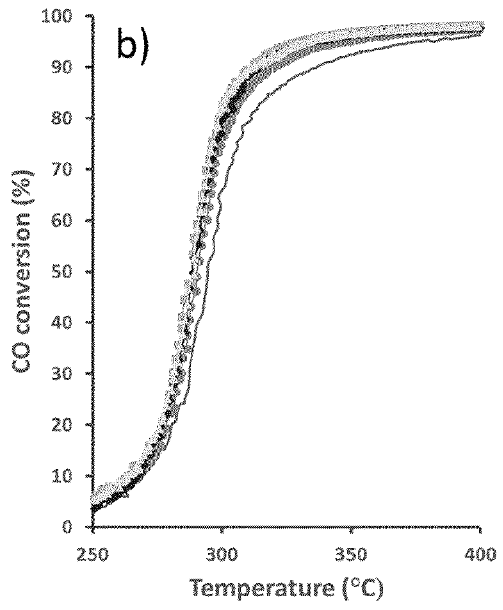

Figure 3c

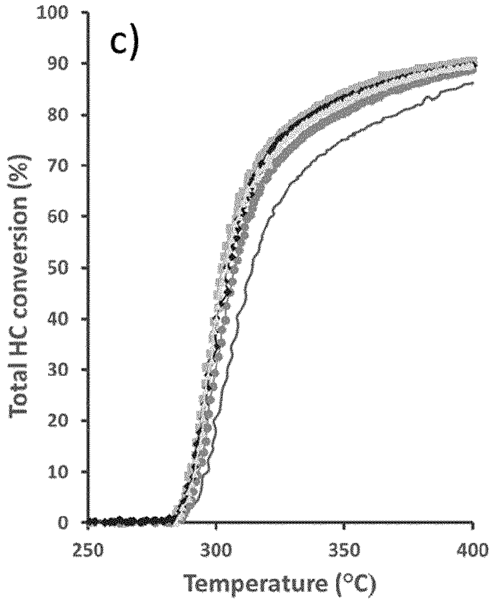


Figure 4

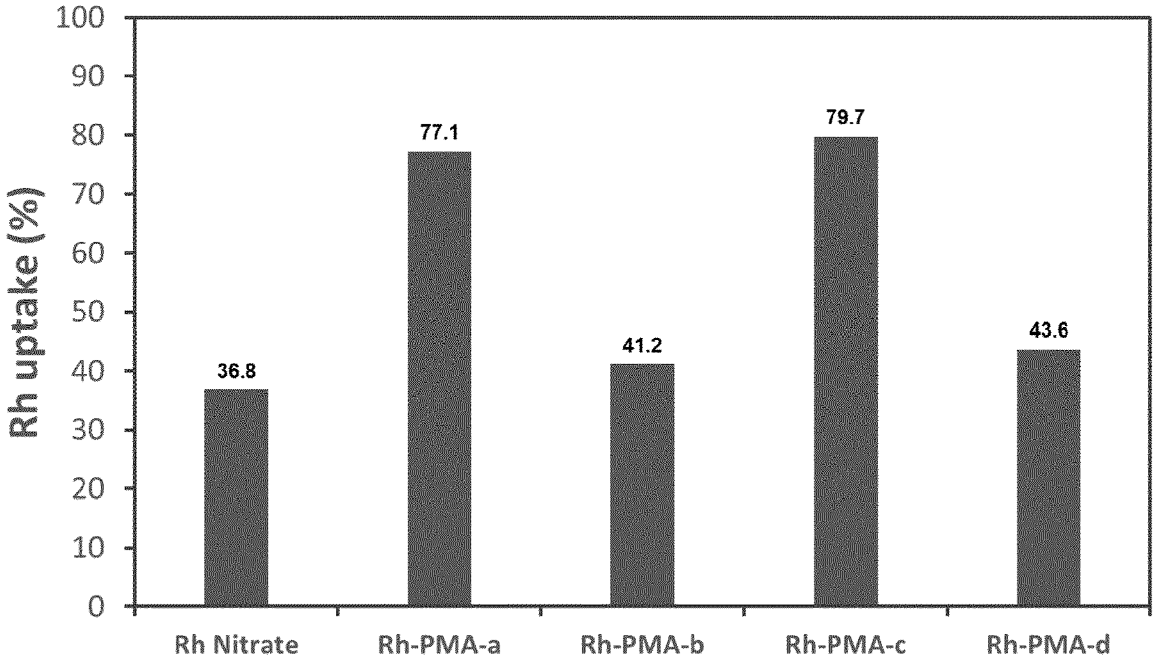

Europäisches Patentamt
European Patent Office
Office européen des brevets

# EUROPEAN SEARCH REPORT

Application Number
EP 22 20 3456

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/263633 A1 (KOPLIN TOBIAS JOACHIM [DE] ET AL) 18 October 2012 (2012-10-18)<br>* paragraph [0040] - paragraph [0055]; claims *<br>* paragraph [0009] - paragraph [0012] *<br>----- | 1-16 | INV.<br>B01J23/46<br>B01J37/02<br>B01D53/94<br>B01J35/00 |
| X,D | US 2012/077669 A1 (MUELLER-STACH TORSTEN [DE] ET AL) 29 March 2012 (2012-03-29)<br>* paragraph [0045] - paragraph [0052]; claims *<br>----- | 16 | |
| A | US 4 708 946 A (OHATA TOMOHISA [JP] ET AL) 24 November 1987 (1987-11-24)<br>* column 6, line 19 - line 44 *<br>----- | 1-16 | |
| | | | TECHNICAL FIELDS SEARCHED (IPC) |
| | | | B01J<br>B01D |

The present search report has been drawn up for all claims

1

| Place of search | Date of completion of the search | Examiner |
|---|---|---|
| Munich | 16 January 2023 | Mauger, Jeremy |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# ANNEX TO THE EUROPEAN SEARCH REPORT ON EUROPEAN PATENT APPLICATION NO.

EP 22 20 3456

This annex lists the patent family members relating to the patent documents cited in the above-mentioned European search report. The members are as contained in the European Patent Office EDP file on
The European Patent Office is in no way liable for these particulars which are merely given for the purpose of information.

16-01-2023

| Patent document cited in search report | Publication date | Patent family member(s) | Publication date |
|---|---|---|---|
| US 2012263633 A1 | 18-10-2012 | BR 112012014199 A2 | 31-05-2016 |
| | | CN 102892506 A | 23-01-2013 |
| | | EP 2512671 A1 | 24-10-2012 |
| | | JP 2013514161 A | 25-04-2013 |
| | | KR 20120104383 A | 20-09-2012 |
| | | RU 2012129865 A | 27-01-2014 |
| | | TW 201136661 A | 01-11-2011 |
| | | US 2012263633 A1 | 18-10-2012 |
| | | WO 2011073120 A1 | 23-06-2011 |
| US 2012077669 A1 | 29-03-2012 | BR 112013007357 A2 | 21-11-2017 |
| | | CA 2813127 A1 | 05-04-2012 |
| | | CN 103260756 A | 21-08-2013 |
| | | EP 2621629 A1 | 07-08-2013 |
| | | JP 2013544629 A | 19-12-2013 |
| | | KR 20140024832 A | 03-03-2014 |
| | | US 2012077669 A1 | 29-03-2012 |
| | | WO 2012042479 A1 | 05-04-2012 |
| | | ZA 201303025 B | 25-06-2014 |
| US 4708946 A | 24-11-1987 | AT 52200 T | 15-05-1990 |
| | | EP 0203525 A1 | 03-12-1986 |
| | | JP H0574415 B2 | 18-10-1993 |
| | | JP S6291244 A | 25-04-1987 |
| | | KR 860008798 A | 18-12-1986 |
| | | US 4708946 A | 24-11-1987 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20120077669 A1